# EUROPEAN PATENT APPLICATION

(11) **EP 3 331 212 A1**
(43) Date of publication of application: **06.06.2018**
(21) Application number: 16306587.3
(22) Date of filing: 30.11.2016
(51) Int. Cl.: H04L 29/06, H04W 12/06, G06F 21/35, G06F 21/34, G06F 21/30

(54) **METHOD, FIRST DEVICE AND SYSTEM FOR AUTHENTICATING TO A SECOND DEVICE**

(71) Applicant: Gemalto SA, 92190 Meudon (FR); SafeNet Data Security (Israel) Ltd., 49511 Petach Tikva (IL)
(72) Inventor: TABAK, Danny, 49511 PETACH TIKVA (IL); JOSEFSSON, Johan, 13881 Gemenos cedex (FR)
(74) Representative: Scheer, Luc

(57) **Abstract**

The invention relates to a method 20 for authenticating to a second device 12 or 14.

According to the invention, the method comprises the following steps. A first device 16 shares with the second device at least one session key. The first device sends to at least one third device 18 at least one first session key 28. The at least one third device connects 210 directly to the second device by using the at least one first session key. The first device sends to the at least one third device a command 216 for disconnecting from or switching to a non-connected mode with the second device. And the at least one third device disconnects 218 from or switches to a non-connected mode with the second device based upon the received command.

The invention also pertains to corresponding first device and system for authenticating to a second device.

## Description

### Field of the invention:

The invention relates generally to a method for authenticating to a second device.

The present invention is notably applicable to a Bluetooth (registered Trademark), Bluetooth Low Energy (or BLE) (registered Trademark) or Wifi (registered Trademark) enabled device, as a Short Range (or SR) Radio-Frequency (or RF) enabled device and a second device. The second device may further cooperate with a chip, so as to access, through the chip, one or several services. The chip may be embedded within or removable, such as a chip included within a smart card or the like, as a Secure Element (or SE), from the second device, as a chip host device.

Within the present description, an SE is a smart object including a chip that protects, as a tamper resistant component, access to stored and processed data and is intended to communicate data with an SE host device, such as a mobile (tele)phone, a tablet, a Machine to Machine (or M2M) or an Internet of Things (or IoT) device or the like.

Moreover, the invention also relates to a corresponding first device for authenticating to a second device.

Finally, the invention pertains to a system for authenticating to a second device as well.

### State of the art:

EP 1 358 748 B1 describes a solution in which a smart card registers one or several session keys to be used by a mobile (tele)phone, as a first device, to connect to a Bluetooth enabled Device (or BD).

However, several devices may simultaneously connect to or attempt to connect to the BD. It is difficult to exchange with the BD since each device is not aware of any other device that is attempting to connect to or that is already connected to the BD.

There is a need to provide a solution that allows managing one or several connections to the BD, as a second device.

### Summary of the invention:

The invention proposes a solution for satisfying the just herein above specified need by supplying a method for authenticating to a second device.

According to the invention, the method comprises the following steps. A first device shares with the second device at least one session key. The first device sends to at least one third device at least one first session key. The at least one third device connects directly to the second device by using the at least one first session key. The first device sends to the at least one third device a command for disconnecting from or switching to a non-connected mode with the second device. And the at least one third device disconnects from or switches to a non-connected mode with the second device based upon the received command.

The principle of the invention consists in a first and a second device store both, at least temporarily, one or several session keys. The session keys may have been generated separately and commonly by using a predetermined session key algorithm and data to be both shared between the first and second devices. Each session key allows a communication session(s) with the second device, as an authenticator. The first device, as an authentication delegator, provides a third device(s) with a registered session key(s), as a first session key(s). The third device(s) connect(s) to the second device without passing via the first device while using the first session key(s). The first device transmits to the third device(s) a command for disconnecting from the second device or a command for switching to a non-connected mode with the second device. The third device(s) terminate(s) the pending connection(s) on the basis of the command provided by the first device. Once released, the second device may thus be available for (an)other connection(s) by the third device(s) or a possible other device(s), like e.g. the first device and/or a fourth device.

The first device keeps a control on a transmission of the concerned session key(s) to a target device(s) and a transmission of an order(s) and/or instruction(s) for disconnecting the target device(s) from the second device.

The first device thus ensures a control of the connection(s) to the second device from a device(s) which is(are) previously provided by the first device with a session key(s) pre-shared between the first and second devices and to be used for one or several connections to the second device. Moreover, the first device ensures a control of the disconnection(s) from the controlled device(s) connected to the second device.

Such a first device control of the connection(s) and the disconnection(s) from the controlled device(s) to the second device allows using a unique and central device. The first device manages thus a number of the pending connection(s) of a target device(s). The pending connection(s) may be simultaneous for certain of them. The first device also manages an order of the connection(s) of the target device(s).

The involvement of the first device allows improving the security of connection(s) to and disconnection(s) from the second device.

The invention solution allows avoiding to involve a user(s) to connect/disconnect one or several devices to/from the second device.

The invention solution allows easing a management of the connection(s)/disconnection(s) to/from the second device.

It is to be noted that, since the target device(s) that receive(s) a session key(s) and then connect(s) directly to the second device, neither the power consumption nor the performance of the first device is affected at all.

According to a further aspect, the invention is a first device for authenticating to a second device. According to the invention, the first device is configured to share with the second device at least one session key. The first device is configured to send to at least one third device at least one first session key. The first device is configured to send to the at least one third device a command for disconnecting from or switching to a non-connected mode with the second device.

The first device may be a mobile phone, a tablet, a laptop, a desktop, a Personal Computer (or PC) or any computing device.

According to still a further aspect, the invention is a system for authenticating to a second device. According to the invention, the system includes a first device, the second device, at least one third device. The first device is configured to share with the second device at least one session key. The first device is configured to send to the at least one third device at least one first session key. The at least one third device is configured to connect directly to the second device by using the at least one first session key. The first device is configured to send to the at least one third device a command for disconnecting from or switching to a non-connected mode with the second device. And the at least one third device is configured to disconnect from or switch to a non-connected mode with the second device based upon the received command.

As to the second device, it may include or be coupled to one or several SEs, one or several (user) terminals with or without a Man Machine Interface (or MMI).

As to the third device(s) to be controlled by the first device, it may include a mobile phone(s), a portable device(s), such as a handheld computer(s), like e.g. a Personal Digital Assistant(s) (or PDA), a palm-top computer(s), a laptop, a desktop, a PC, a Voice Over Internet Protocol (or VOIP) handset(s), a netbook(s), a tablet(s), a set-up box(es), a media player(s), a game console(s), a TeleVision (or TV) set(s), a machine of an M2M device(s), such as a vehicle computer(s), and/or an IoT device(s).

### Brief description of the drawings:

Additional features and advantages of the invention will be more clearly understandable after reading a detailed description of one preferred embodiment of the invention, given as an indicative and non-limitative example, in conjunction with the following drawings:

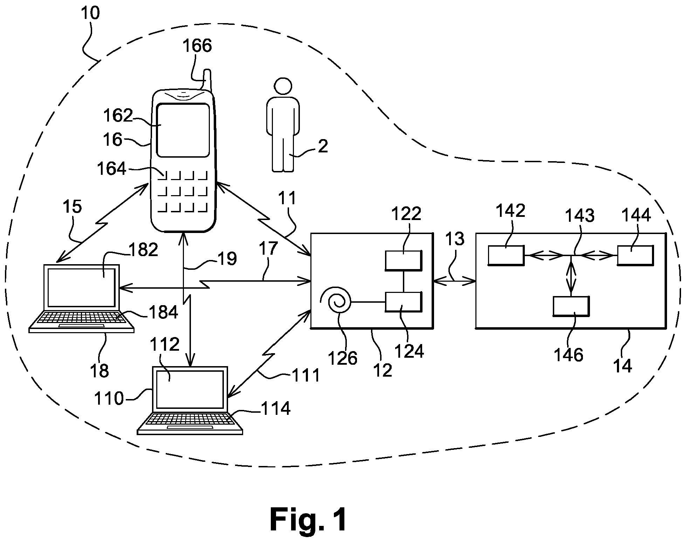

- Figure 1 illustrates a simplified diagram of one embodiment of a system with a mobile phone for authenticating to an authenticator, the phone being adapted to control one or several PCs, as a controlled device(s), to connect to and disconnect from the authenticator, according to the invention; and

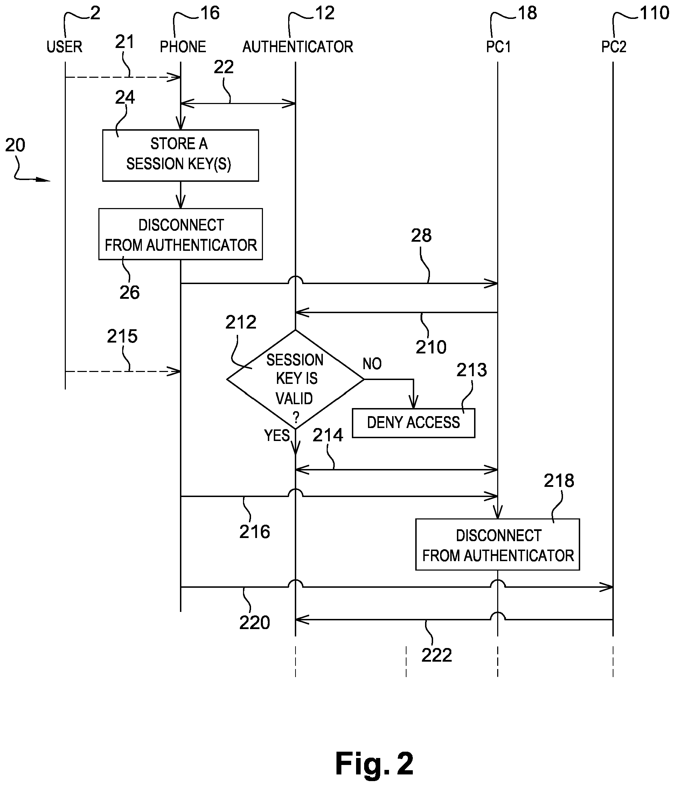

- Figure 2 represents an embodiment of one message flow between notably the phone, a first PC and the authenticator of figure 1, in which the phone transmits to the first PC a session key(s) shared between the phone and the authenticator, the first PC connects directly to the authenticator by using a first session key(s) and the phone orders the first PC to disconnect from the authenticator.

### Detailed description:

Herein under is considered a particular embodiment in which the invention method for authenticating to an SR RF enabled device, as a second device, is implemented by using a mobile phone, as a first device, and a first PC, as a third device controlled by the first device. The second device includes or is coupled to a chip incorporated, possibly in a removable manner, within a Printed Circuit Board (or PCB) of a (user) terminal (or terminal), as a chip host device. The chip may also incorporate at least part of the terminal component(s), like e.g. a main processor, an application processor and/or other electronic component(s).

Alternately, the chip may be or include a Trusted Execution Environment (or TEE), as a secure area of a terminal processor and a secured runtime environment.

The chip is preferably included within an SE. The SE may nevertheless have different form factors.

Instead of being embedded within its host device, the chip may be carried by a medium, such as a smart card or a dongle, like e.g., a Universal Serial Bus (or USB) type dongle, and is communicatively coupled or connected to its host device.

The invention does not impose any constraint as to a kind of the SE, when present.

As a removable SE, it may include a smart dongle of the USB type, a (micro) Secure Digital (or SD) type card, a Multi-Media type Card (or MMC), a Subscriber Identity Module (or SIM) type card or any format medium to be connected or coupled to a chip host device.

Alternatively, the SE includes a chip that is fixed to a chip host device.

According to another embodiment (not represented), the invention method for authenticating to an authenticator is used with an authenticator, as a standalone device, i.e. not incorporating or being coupled to any secondary chip, like e.g. an SE chip.

Naturally, the described embodiment is only for exemplifying purposes and is not considered to reduce the scope of the invention.

**Figure 1** shows schematically a system 10 for authenticating to an SR RF enabled device 12, as a second device and an authenticator, by using a mobile phone 16, as an authentication delegator.

The authenticator 12 is for example a smart badge holder, like e.g. a BLE smart card reader, such as a product termed SafeNet Reader CT1100 or Gemalto Reader CT1100. The authenticator 12 may be a USB smart card dongle or any other communicating device.

The authenticator 12 may be equipped (or not) with an MMI or a limited MMI, like e.g. a led for indicating a power on, a led for indicating a pending (communication) session and/or a button to manage different modes (i.e. without any display screen).

The authenticator 12 includes a (micro)processor(s) 122 (and/or a (micro)controller(s)), as data processing means, and one or several Input/Output (or I/O) interfaces 124.

The authenticator 12 includes optionally e.g. an antenna 126 allowing to communicate, in an SR RF manner, with an external device(s), like e.g. the phone 16. The authenticator 12 is able to use e.g. a Bluetooth type protocol, a BLE type protocol, a Wifi type protocol, a Direct Wifi type protocol and/or any other communication protocol(s).

The authenticator 12 is coupled (or incorporates), over a ContacT (or CT) or ContacT-Less (or CTL) link 13, to e.g. a smart card 14.

The smart card 14 is a chip medium that is removable from the authenticator 12.

The smart card 14 includes a chip. The chip comprises a (micro)processor(s) 142 (and/or a (micro)controller(s)), as data processing means, a memory(ies) 144, as data storing means, and one or several I/O interfaces 146 that are internally connected through a control and data bus 143.

The authenticator 12 and/or the smart card chip is(are) preferably able to generate one or several (communication) session keys to be used for communicating with and/or through the authenticator 12. The or each session key is e.g. a random short term session key, as a temporary session key, or a permanent session key. The or each session key may be generated by using a predetermined session key generation algorithm and data, like e.g. a long term key or a mother key, to be both shared with one or several authentication delegators, like e.g. the phone 16.

The authenticator 12 and/or the smart card chip store(s) the session key(s).

The authenticator 12 and/or the smart card chip share(s) with an interlocutor(s), like e.g. the phone 16, at least part of the shared session key(s).

The authenticator 12 and/or the smart card chip is(are) able to authenticate the interlocutor(s) by using the shared session key(s). The shared session key(s) allow(s) authenticating the concerned interlocutor(s) by using a predefined authentication algorithm.

The system 10 includes the authenticator 12, the phone 16 and one or several PCs 18, 110 to be controlled by the phone 16, as an authentication delegator.

The phone 16 includes (and/or is connected to) a battery(ies).

The phone 16 comprises a (micro)processor(s) (and/or a (micro)controller(s)), as data processing means (not represented), preferably a memory(ies), as data storing means (not represented), and one or several I/O interfaces (not represented).

The phone 16 includes (or is connected to) a display screen 162 and a keyboard 164, as an MMI allowing a user 2 to interact with the phone 16. The phone 16 includes optionally a Long Range (or LR) RF antenna 166 allowing to communicate, in an LR RF manner, with a mobile communication network(s) (not represented).

The phone 16 incorporates (or is connected to) an SR RF antenna (not represented) allowing to communicate, e.g. through an SR RF link 11, 15, 17, i.e. in a CTL manner, with an external device(s), like e.g. the authenticator 12 and a PC(s) 18, 110, as a device(s) to be controlled by the phone 16.

Alternately or additionally, instead of the SR RF link 11, 15, 17, the phone 16 and the authenticator 12 and/or the PC 18, 110 exchange, over a wire(s), i.e. in a CT manner.

The phone 16 (or a cooperating chip) is(are) preferably able to generate one or several (communication) session keys to be used for communicating with and/or through the authenticator 12. The or each session key is e.g. a random short term session key, as a temporary session key, or a permanent session key. The or each session key may be generated by using the predetermined session key generation algorithm and the data, like e.g. the long term key, shared with one or several authenticators 12.

The phone 16 is preferably able to authenticate to the authenticator 12 by using one or several shared session key(s) and the authentication algorithm.

The phone 16 supports an invention application for controlling a third device(s), as a target device(s), for a connection(s) to/disconnection(s) from the authenticator 12.

The phone 16 is able to share with the authenticator 12 (and/or the (smart card) chip) one or several (communication) session keys to be used for communicating with or through the authenticator 12 (and/or the (smart card) chip). The phone 16 uses preferably a secure channel to share with the authenticator 12 the session key(s).

The phone 16 or (an)other device(s), such as an SE, cooperating with the phone 16 store(s) the shared session key(s) and the authentication algorithm.

The phone 16, as an authentication delegator, is configured to transmit to one or several third devices, like e.g. the PC(s) 18, 110, a first session key(s). The first session key(s) may be generated by the phone 16 while using the session key generation algorithm and data that is shared with the authenticator 12.

Prior to transmitting the first session key(s), the phone 16 enciphers optionally the first session key(s) by using a key shared with the third device(s) to be addressed and transmits to the third device(s) to be addressed the enciphered first session key(s).

The third device(s) to be thus addressed is(are) previously selected by the user 2 while using the phone MMI (or an MMI connected to the phone 16) or automatically by the phone 16 previously configured e.g. while using device(s) that is(are) identified and pre-registered within an ordered list at the phone 16 (i.e. within a phone 16 memory or a memory of an accessory cooperating with the phone 16). The concerned addressed third device(s) connect(s) directly, i.e. without passing through the phone 16, to the authenticator 12.

The phone 16 is adapted to transmit to the concerned third device(s), like e.g. the PC(s) 18, 110, a command(s) for disconnecting from or switching to a non-connected mode with the authenticator 12. Each third device is identified by e.g. an address allowing to communicate with the concerned third device.

Prior to transmitting the concerned command(s), the phone 16 enciphers optionally the command(s) by using a key shared with the third device(s) to be addressed and transmits to the third device(s) to be addressed the enciphered command(s).

The concerned addressed third device(s) terminate(s) thus a pending connection(s) to or communication(s) with the authenticator 12.

Each PC 18, 110 includes a (micro)processor(s) (and/or a (micro)controller(s)), as data processing means (not represented), preferably a memory(ies), as data storing means (not represented), and one or several I/O interfaces (not represented).

Each PC 18, 110 may include (or be connected to) a display screen 182, 112 and a keyboard 184, 114, as an MMI allowing the user 2 (and/or (an)other user(s)) to interact with the concerned PC 18, 110 respectively.

Each PC 18, 110 is able to authenticate to the authenticator 12 by using a session key shared with the authenticator 12, e.g. a challenge to be received from the authenticator 12, and the authentication algorithm. The session key is to be provided by an authentication delegator.

Each PC 18, 110 incorporates (or connected to) an SR RF antenna (not represented) allowing to communicate, e.g. through an SR RF link 17, 111, in a CTL manner with the authenticator 12 respectively.

Alternately, instead of the SR RF link 17, 111, each PC 18, 110 and the authenticator 12 exchange over a wire(s), i.e. in a CT manner.

Each PC 18, 110 is arranged to connect directly to the authenticator 12 by using a session key to be received from an authentication delegator, like e.g. the phone 16.

Each PC 18, 110 is adapted to disconnect from or switch to a non-connected mode with the authenticator 12 based on a command to be received from the authentication delegator, like e.g. the phone 16.

For sake of simplicity, the first PC 18 and the second PC 110 are termed infra the PC1 18 and the PC2 110 respectively.

**Figure 2** depicts an exemplary embodiment of a message flow 20 that involves notably the user 2, the authenticator 12, the phone 16, the PC1 18 and the PC2 110.

In the explained embodiment, in a single user and a single host pairing scenario, it is assumed that the user 2 uses the phone 16, the PC1 18 and the PC2 110 that are each in a range that is sufficiently close to the authenticator 12 to communicate separately and individually, in a CTL manner, with the authenticator 12.

It is further assumed that the phone 16 is in a range that is sufficiently close to the PC1 18 and the PC2 110 to communicate separately and individually, in a CTL manner, with the PC1 18 and then the PC2 110.

The user 2 uses 21 the phone 16 MMI to detect and connect to the authenticator 12.

Once connected, the phone 16 receives 22, after a connection request, from the authenticator 12 a session key(s) or data, like e.g. a key or a secret, to be used for generating one or several session keys.

The phone 16 stores 24, at least in a temporary manner, after a possible generation by using data received from the authenticator 12, the shared session key(s) including a first session key (or several session keys).

The phone 16 shares thus with the authenticator 12 the first session key.

The user 2 selects, among e.g. a displayed device set that may be ordered, the PC1 18, as a first target device, so as to use the authenticator 12 to access a first service, like e.g. to authenticate a user (as one factor authentication, namely something that the user knows) to a domain (such as a login to the PC1 18 or a network) based on data generated and/or stored by the chip 14 (as one factor authentication, namely something that the user has).

Alternately, the phone 16 is pre-configured with an ordered list including the PC1 18, as a first priority third device that the phone 16 has preferably previously detected, and selects automatically the PC1 18, as a first target device.

The phone 16 disconnects 26 preferably from the authenticator 12. Such a disconnection from the authenticator 12 may allow the PC1 18, as the first target device, to detect the authenticator 12.

Instead of disconnecting from the authenticator 12, the phone 16 remains connected simultaneously to the authenticator 12, if the authenticator 12 is able to connect to several host devices in parallel (in a multi-host pairing scenario).

The phone 16 sends to the PC1 18 a message 28 including, preferably in a ciphered manner (i.e. through a secured channel), the first session key, so that the phone 16 delegates its authentication capability to the PC1 18. The message 18 includes data, like e.g. a Bluetooth type address, as metadata, allowing to identify uniquely the authenticator 12.

The PC1 18 stores, at least in a temporary manner, the first session key.

Then, only the PC1 18 connects directly to the authenticator 12 by sending to this latter a message 210 for connecting to the authenticator 12. Such a message 210 includes first authentication data that is generated by using the first session key, the authentication algorithm and e.g. a first challenge that has been received (not represented) from the authenticator 12.

Once the first authentication data is received, the authenticator 12 verifies 212 whether the received first authentication data is or is not expected first data. The expected first data is first reference data that is generated and stored, at least in a temporary manner, by the authenticator 12 while using the first session key, data, like e.g. the first challenge to be sent to the authenticator interlocutor, and the authentication algorithm. The first challenge may be e.g. a (pseudo) random number.

If the first authentication data does not match the expected first data, then the authenticator 12 denies 213 access to the PC1 18. Thus, the authenticator 12 forbids any further data exchange with the PC1 18 and terminates the first (communication) session.

Otherwise, i.e. if the first authentication data matches the expected first data or the first session key is valid, the authenticator 12 authorizes the PC1 18 to further communicate or exchange with the authenticator 12.

Once the PC1 18 is connected to the authenticator 12, the PC1 18 detects that the authenticator 12 is e.g. a standard PC Smart Card (or token) reader to allow a smart card 14 (or token) communication for one or several smart card applications (such as a BCCID APDU transaction application(s)) supported by the smart card 14 (or the token).

Once the PC1 18 is connected to the authenticator 12, the PC2 110 may be not able to detect, notably in a single host pairing scenario, a presence of the authenticator 12.

In case of an authentication success by using the first session key, the PC1 18 exchanges data 214 with the authenticator 12. Neither the phone 16 performance nor the phone battery power consumption during a communication (or an exchange) between the PC1 18 and the authenticator 12, is affected at all. As a matter of fact, the communication between the PC1 18 and the authenticator 12 is direct, i.e. does not involve the phone 16 within the communication itself.

The user 2 selects 215, among e.g. a displayed device set that may be ordered, the PC2 110, as a second target device, so as to use the authenticator 12 to access a second service, like e.g. to sign a document.

Alternately, the phone 16 is pre-configured with an ordered list including the PC2 110, as a second priority third device that the phone 16 has preferably previously detected, and selects automatically the PC2 110 (or another application supported by the phone 16 or the PC1 18), as a second target device.

Once the PC2 110 has been selected or the phone 16 decides, under a particular predetermined event(s), like e.g. a time event such as the occurrence of a predefined first time, the phone 16 sends to the PC1 18 a message 216 including a command for disconnecting from or switching to a non-connected mode with the authenticator 12, so that the PC1 18 terminates its connection to the authenticator 12.

The PC1 18 disconnects 218 from or switches to a non-connected mode with the authenticator 12 based on the received command.

Once disconnected from or in a non-connect mode with the authenticator 12, depending on the received command, the PC1 18 may enter, under the phone 16 control, into a fake connection mode, so as e.g. to prevent from having a Windows (registered Trademark) desktop locking screen. Alternately, the PC1 18 may trigger, under the phone 16 control, a card removal event (or a card power down or a fake PCSC (or token) transaction loop), so as e.g. to prevent from accessing any application supported by the smart card 14. The smart card 14 may thus be left in a non-connected mode, so as e.g. to allow the PC1 18 to request the phone 16 to resume the connection to the authenticator 12.

The phone 16 forces or controls thus the state and/or the mode of the PC1 18, as a target device, in which the target device is to use.

The PC1 18 erases preferably, possibly under the phone 16 control, the used first session key and/or the first authentication data that is(are) thus no more available for a possible attacker.

The phone 16 sends to the PC2 110, as the target second device, a message 220 including, preferably in a ciphered manner (i.e. through a secured channel), the first session key (or a second) session key, so that the phone 16 delegates its authentication capability to the PC2 110. The message 220 includes data, like e.g. the Bluetooth type address, as metadata, allowing to identify uniquely the authenticator 12. Thus, a single first session key or another session key while discarding or erasing by the phone 16 the first session key (more secure than using one and the same session key) may be used to connect to the authenticator 12.

The PC2 110 stores the first (or second) session key, as a temporary key (or a permanent key).

Then, only the PC2 110 connects directly, i.e. resume the connection (when previously terminated) to the authenticator 12 by sending to this latter a message 222 for connecting to the authenticator 12. Such a message 222 includes second authentication data that is generated by using the first (or second) session key, the authentication algorithm and e.g. a second challenge (or the first challenge) that has been received (not represented) from the authenticator 12.

Once the second authentication data is received, the authenticator 12 verifies (not represented) whether the second authentication data is or is not expected second data. The expected second data is second reference data that is generated and stored, at least in a temporary manner, by the authenticator 12 while using the first (or second) session key, the authentication algorithm and data, like e.g. the second challenge to be sent to the authenticator interlocutor. The second challenge is preferably distinct from the first challenge. The second challenge may be e.g. the or another (pseudo) random number.

If the second authentication data does not match the expected second data, then the authenticator 12 denies (not represented) access to the PC2 110. Thus, the authenticator 12 forbids any further data exchange with the PC2 110 and terminates the second (communication) session.

Otherwise, i.e. if the second authentication data matches the expected second data or the first (or second) session key is valid, the authenticator 12 authorizes (not represented) the PC2 110 to further communicate or exchange with the authenticator 12.

In case of an authentication success by using the first (or second) session key, the PC2 110 exchanges (not represented) data with the authenticator 12. Neither the phone 16 performance nor the phone battery power consumption during a communication (or an exchange) between the PC2 110 and the authenticator 12, is affected at all.

Once the phone 16 decides under a particular predetermined event(s), like e.g. a time event such as the occurrence of a predefined second time, the phone 16 sends to the PC2 110 preferably a message including a command for disconnecting from or switching to a non-connected mode with the authenticator 12, so that the PC2 110 terminates its connection to the authenticator 12.

The PC2 110 disconnects from or switches to a non-connected mode with the authenticator 12 based on the received command or an expiration of a time period associated with the first (or second) session key.

Alternatively, instead of being controlled by the phone 16, the user 2 controls, through the PC2 110 MMI (or an MMI connected to the PC2 110), a disconnection of the PC2 110 from the authenticator 12, so as to terminate its connection to the authenticator 12.

A single pairing to the authenticator 12, i.e. only one pairing with the authenticator 12, in a single host pairing scenario, is possible at a given time, is thus fully managed and controlled by the phone 16. The phone 16 delegates a session key shared with the authenticator 12 to any target device that may be used by the user 12 or another user, so as to allow the concerned target device(s) to communicate with the authenticator 12.

The PC2 110 erases preferably, possibly under the phone 16 control, the used first (or second) session key and/or the second authentication data that is(are) thus no more available for a possible attacker.

The invention solution is compatible with existing authenticators.

The invention solution allows using a central device to have a full control of the number of simultaneous and/or consecutive connections to and disconnections from the authenticator from a target device(s). The target device(s) is(are) selected by or through the central device.

Likewise, the invention solution allows using a central device to have a complete control of the order of consecutive connections to and disconnections from the authenticator from a target device(s).

Such a use of the central device allows easing a management of connections to/disconnections from the authenticator while improving the security.

The invention solution allows avoiding to involve a user at the authenticator by e.g. depressing a button or the like (such as entering a user password), since a connection to/disconnection from the authenticator is controlled from or through a single authentication delegator. The user has thus not to intervene neither at the authenticator nor at the target device, so as to authenticate securely to the authenticator.

The invention solution is secure since a connection between a target device and an authenticator is possible only by an authentication delegation session between an authentication delegator and the target device. Thus, an attack is prevented.

The embodiment that has just been described is not intended to limit the scope of the concerned invention. Other embodiments may be given. As another embodiment example, instead of a single host pairing with the authenticator, as a multi-host pairing scenario (i.e. to switch between different hosts without losing the authentication context), the phone 16 delegates its authentication capability separately to several target devices, so as to connect, at a given time and possibly for a given time period, simultaneously the concerned target devices to the authenticator. Likewise, the phone 16 may control separately a disconnection from target devices, so as to disconnect, at a given time, individually the concerned target devices from the authenticator.

## Claims

1. A method (20) for authenticating to a second device (12 or 14),
**characterized in that** the method comprises the following steps:
- a first device (16) shares with the second device at least one session key;
- the first device sends to at least one third device (18) at least one first session key (28);
- the at least one third device connects (210) directly to the second device by using the at least one first session key;
- the first device sends to the at least one third device a command (216) for disconnecting from or switching to a non-connected mode with the second device; and
- the at least one third device disconnects (218) from or switches to a non-connected mode with the second device based upon the received command.

2. Method according to claim 1, wherein, once disconnected from or in a non-connected mode with the second device, the at least one third device enters, under a first device control, into a fake connection mode.

3. Method according to claim 1, wherein, once disconnected from or in a non-connected mode with the second device, the at least one third device triggers, under a first device control, a card removal event.

4. Method according to any of claims 1 to 3, wherein, prior to sending the at least one first session key, the first device enciphers the at least one first session key and sends to the at least one third device the enciphered at least one first session key.

5. Method according to any of claims 1 to 4, wherein, prior to a connection from the at least one third device to the second device, the first device disconnects (26) from the second device.

6. Method according to any of claims 1 to 5, wherein the second device uses at least one communication protocol included in a set comprising a Bluetooth type protocol, a Bluetooth Low Energy type protocol and a Direct Wifi type protocol.

7. Method according to any of claims 1 to 6, wherein, besides the at least one first session key, the first device sends to the at least one third device metadata (28) allowing to identify uniquely the second device.

8. Method according to any of claims 1 to 7, wherein the method further comprises the following steps:
- the first device sends to at least one fourth device the first session key or a second session key (220); and
- the at least one fourth device connects (222) directly to the second device by using the at least one first session key or the second session key.

9. A first device (16) for authenticating to a second device (12 or 14), **characterized in that** the first device is configured to:
- share with the second device at least one session key;
- send to at least one third device at least one first session key (28);
- send to the at least one third device a command (216) for disconnecting from or switching to a non-connected mode with the second device.

10. A system (10) for authenticating to a second device (12 or 14),
**characterized in that,** the system including a first device (16), the second device, at least one third device (18, 110), the first device is configured to:
- share with the second device at least one session key;
- send to the at least one third device at least one first session key (28);
**in that** the at least one third device is configured to connect (210) directly to the second device by using the at least one first session key;
**in that** the first device is configured to send to the at least one third device a command (216) for disconnecting from or switching to a non-connected mode with the second device; and
**in that** the at least one third device is configured to disconnect (218) from or switch to a non-connected mode with the second device based upon the received command.
